# EUROPEAN PATENT APPLICATION

(11) **EP 1 518 676 A2**
(43) Date of publication of application: **30.03.2005**
(21) Application number: 04255836.1
(22) Date of filing: 24.09.2004
(51) Int. Cl.: B41F 19/00, G06K 15/00, B41J 3/407, H04N 1/32, G06F 17/30

(54) **Multimedia printer capable of sharing processing tasks**

(30) Priority: 25.09.2003 US 506206; 25.09.2003 US 506263; 25.09.2003 US 506302; 25.09.2003 US 506303; 25.09.2003 US 506411; 30.03.2004 US 814386
(71) Applicant: Ricoh Company Ltd., Tokyo 143-8555 (JP)
(72) Inventor: Hart, Peter E, c/o Ricoh Innovations Inc., Menlo Park, California 94025-7022 (US); Hull, Jonathan J, c/o Ricoh Innovations Inc., Menlo Park, California 94025-7022 (US); Graham, Jamey, c/o Ricoh Innovations Inc., Menlo Park, California 94025-7022 (US); Piersol, Kurt W, c/o Ricoh Innovations Inc., Menlo Park, California 94025-7022 (US)
(74) Representative: Mounteney, Simon James

(57) **Abstract**

A printing system for time-based data enables the printing of time-based media by sharing processing resources on a printer and on an external media processing system such as an external service, for example, a web service. The media processing may similarly be shared between the printer and an external device attached via a communication interface to the printer or via a network. An example of such a device is a personal computer. A stand-alone version of the printer with embedded time based data in multiple media is described with a display and user interface so that a user can walk up to the printer and perform multimedia processing at the printer. The stand alone version has a network connection or other communication interface so that an external service or device can interface directly with the printer in performing media processing or a user can interface with the external service or device directly through the printer.

## Description

### BACKGROUND

### Field of the Invention

This invention relates generally to networked printing systems that have embedded functionality for printing time-based media, and in particular to printing time-based media that results in a combination of a printed output and a related electronic data output.

### Background of the Invention

A conventional printer can receive documents or other data in a number of formats and then prints the contents of those documents or data in accordance with the proper format. But while conventional printers can print documents in a wide variety of formats, these printers are fundamentally limited in their ability to reproduce different kinds of media. For example, it is standard technology for a printer to produce images of static text, pictures, or a combination of the two. But because these printers print onto paper or another similar fixed medium, they cannot record the nuances of time-based media very well.

What is needed therefore is a printer that is equipped to print time-based media without the limitations of conventional printers. It is further desirable that such a printer be able to perform at least some of the necessary processing itself, while some of the processing may be performed by an external networked service and / or by another external device, rather than require an attached computer or other device to perform all of the processing.

Furthermore, what is needed is resource allocation means that can determine which media processing tasks are to be processed by a stand-alone multimedia printing system and which by an external networked service or device, or which can allocate processing among the printer and the external service or device.

What is also needed is a user interface that permits a user to control the allocation of media processing between the stand-alone printing system and an external service, an external device, or both.

Additionally, it is desirable that the printer provide a variety of output media options. It is also desirable that the printer can provide storage for the various forms of output media for example in a multimedia content database. A printer that can independently maintain a multimedia database provides streamlined storage of the multimedia content.

### Summary of the Invention

To satisfy the needs unmet by conventional printers, a system for printing time-based data in accordance with an embodiment of the present invention comprises a media processing system residing at least in part on a networked multimedia printer and at least in part on an external media processing system. In a typical hardware configuration, a multimedia printer comprises a chassis for housing a print engine that produces a paper or other printed output and one or more electronic devices that produce a related electronic output. The printed and electronic outputs provide improved representations of the time-based media over that of a conventional paper printer.

In one embodiment of the system, the media processing system includes a resource allocation module for determining which tasks are to be processed by either of the external media processing system or the printer or the allocation of processing of a task between them. In one example, an external media processing system is an external networked service. An example of an external networked service is a web service. In another example, it is an external computing device such as a personal computer having a physical or network connection to the printer. An interface coupled to the media processing system receives time-based media from an external source. Based on any of a number of desired applications, the media processing system determines a printed representation of the time-based media or an electronic representation of the time-based media, or both. In one embodiment, a printed output system in communication with the media processing system can receive the printed representation and produce a corresponding printed output. Similarly, an electronic output system in communication with the media processing system can receive the electronic representation and produce a corresponding electronic output. In this way, the printer creates a representation of time-based media by producing a printed output and / or an electronic output.

In various embodiments, the system for printing time-based data includes different combinations of embedded devices that allow for various mechanisms for receiving the media and various mechanisms for creating the electronic and / or printed outputs. For example, the interface may include a communication interface, a network communication interface, a removable media storage device reader, a video input device (such as a DVD reader or a video cassette reader), an audio input device (such as a CD reader or an audio cassette reader), a media broadcast receiver, a radio receiver, screen capture hardware, a video and/or audio recorder, or any of a number of different types of devices that can receive time-based media. Similarly, the electronic output system may write the electronic representation to one or more different types of removable media storage devices, such as a DVD, a video cassette tape, a CD, an audio cassette tape, a flash card, a computer disk, an SD disk, or another computer-readable medium. The electronic output system may also include a disposable media writer, a self-destructing media writer, a video display, an audio speaker, a driver for a speaker system (such as an embedded MIDI player), or an embedded web page display. In this way, a multimedia printer which performs multiple functions, can be configured to have any of a large number of combinations of embedded subsystems, allowing various embodiments of the printer to meet the needs of many different applications.

Because of the great many combinations of input and output devices possible for the time-based data printing system, the system may include embedded hardware, software, or a combination thereof for performing a wide variety of different operations on the media. In this way, the system can be configured to produce various types of printed and electronic outputs based on received media to meet the needs of different applications. To solve various problems, in embodiments of the system, the media processing system can include one or more of one or more modules for performing a media processing task. Examples of such modules are an embedded multimedia server, an embedded audio encryption module, an embedded video encryption module, an embedded audio sound localization module, and an embedded video motion detection module.

These different tasks may be performed on the printer by the media processing system, or partially on the printer by the media processing system in conjunction with one or more electronic devices capable of performing some of the required processing steps. The printing system can thus balance the required processing of the media between the printer and one or more connected electronic devices, such as a personal computer or an external network service. By conducting at least some of the processing on the printer, the printer relieves at least some of the processing load on external devices that the printer's additional functionality may require.

### Brief Description of the Drawings

FIG. 1 is a schematic diagram of a system for printing time-based data in accordance with an embodiment of the present invention.
FIG. 2 is a flow diagram of the operation of the system in accordance with an embodiment of the present invention.
FIG. 3 is a schematic diagram of various media source input subsystems of the printer, in accordance with embodiments of the present invention.
FIG. 4 is a schematic diagram of the printer's printed output system, in accordance with an embodiment of the present invention.
FIG. 5 is a schematic diagram of various electronic media output systems of the printer, in accordance with embodiments of the present invention.
FIG. 6 is a schematic diagram of various media processing systems of the printer, in accordance with embodiments of the present invention.
FIG. 7 is a flow diagram of a method for allocating resources for a media processing task in accordance with an embodiment of the present invention.

### Detailed Description of the Preferred Embodiments

### System Architecture

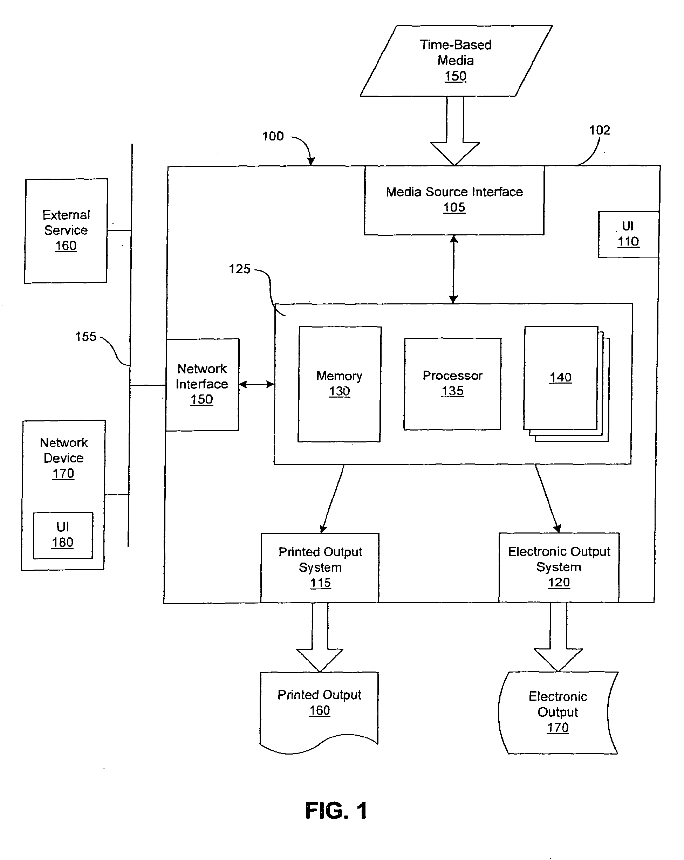

FIG. 1 is a high-level diagram of one embodiment of a system for printing time based data, which includes a multimedia processing printer 100 communicatively coupled to an external service 160 and a network device 170 via a network 155. Printer 100 includes within or physically attached to a housing 102 (e.g. a chassis) a media source interface 105, a user interface 110, a printed output system 115, an electronic output system 120, and a media processing system 125. Capable of receiving time-based media 151, the media source interface 105 can take a variety of forms and may include one or more devices that can receive media data or create media data by observing a media event. In one embodiment, the user interface 110 includes a display system, one or more user input devices (e.g. a pointing device, a keyboard or a keypad), software for processing input, and software for displaying output. The user interface 110 can also include other sensory output devices, for example, a speaker and a display. In one example, the display is embedded on the housing 102 for viewing. In another example, it is attached via a physical coupling to the printer 100. This allows for it to be wall mounted for example. In either example of an embedded or attached display, the display can also have a full-size screen. The user interface 110 may include any number of embodiments described in the co-pending U.S. patent application number 10/814,845, filed March 30, 2004, entitled, "Stand Alone Multimedia Printer with User Interface for Allocating Processing," Attorney Docket No. 20412-08457, which application has been incorporated by reference in its entirety. A printing system for time-based data enables the printing of time-based media by sharing processing resources on a printer and on an external media processing system such as an external service, for example, a web service. The media processing may similarly be shared, as determined by a resource allocation module, or as indicated by a user via a user interface, between the printer and an external media processing system coupled via a communication interface to the printer or via a network. An example of such an external media processing system is an external device such as a personal computer or an external service such as a web service. A stand-alone version of the printer with embedded time based data in multiple media is described with a display and user interface so that a user can walk up to the printer and perform multimedia processing at the printer. The stand alone version has a network connection or other communication interface so that an external service or device can interface directly with the printer in performing media processing or a user can interface with the external service or device directly through the printer.

In one embodiment, the user interface 110 allows a user to make selections about the processing of media and/or about the format or destination of the printed or electronic outputs. Similarly, the printed output system 115 and the electronic output system 120 can take a variety of forms and may each include one or more devices that can produce, respectively, a printed output 175 or an electronic output 190. Each of the interfaces for inputting and outputting are accessible via the housing 102.

In one embodiment, the media processing system 125 includes a memory 130, a processor 135, and one or more embedded functionality modules 140. In this embodiment, the memory 130 includes a multimedia database 116 for storing content selections (e.g. files) in different media forms such as video, audio, text, photograph, or graphical. The embedded functionality modules 140, which are described in more detail below, may include software, hardware, or a combination thereof for implementing at least a portion of the functionality of the multifunction printer 100. The media processing system 125 is coupled to the media source interface 105, allowing it to communicate therewith. The media processing system 125 is also coupled to the printed output system 115 and to the electronic output system 120 for providing the appropriate commands and data to those systems.

The printer 100 further includes a network interface 150, functionally coupled to the media processing system 125. The network interface 150 allows the printer 100 to communicate with other electronic devices, such as network device 170 and external service 160. In one embodiment, the network device 170 is a computer system, such as a personal computer. Beneficially, the network device 170 includes processing capability for performing any desired processing on the media data. In this way, the network device 170 can relieve the printer 100 of some of the processing load required to produce printed and electronic outputs from the time-based media. In one embodiment, the network device 170 includes a user interface 180 that allows a user to make selections about the processing of the media and/or about the format or destination of the printed or electronic outputs. In other embodiments, the user interface 180 can be located on another attached device or on the printer 100 itself. The user interface 180 may include a display system, software for communicating with an attached display, or any number of embodiments described in co-pending U.S. patent application entitled, "User Interface for Networked Printer," filed March 30, 2004, Attorney Docket No. 20412- 08456, which application has been incorporated by reference in its entirety.

In another embodiment, the printer 100 is coupled to an external service 160, which includes hardware and/or software for performing some of the processing tasks on the media to be printed. In a typical embodiment, a remote service provider operates the external service 160. In such an embodiment, whereas the network device 170 may communicate with the printer 100 over a local area network, the external service may communicate with the printer 100 over a wide area network or over the Internet. By sharing the media processing tasks with an external service 160, possibly operated by a service provider, the printing system can perform tasks that are under the control of the service provider. In this way, a service can be set up around a particular form of media processing, where a user pays for use of the service.

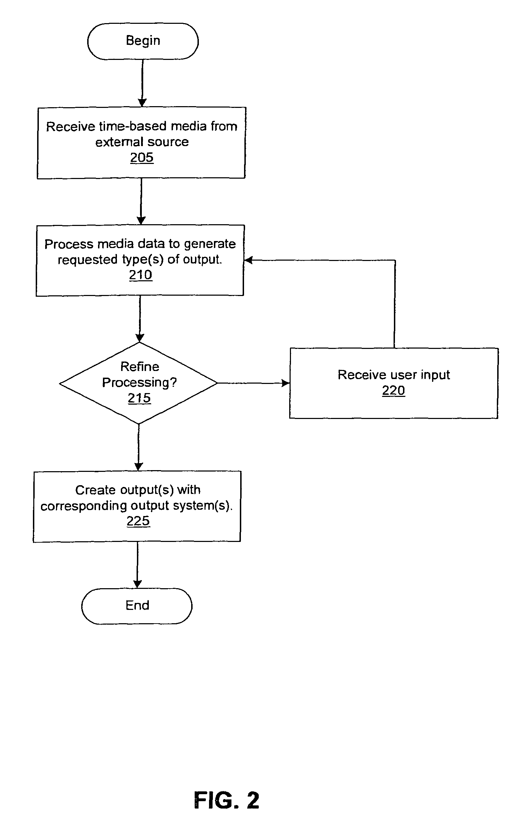

FIG. 2 shows an overview of a generalized process in which the printer 100 creates a representation of time-based media data 151, in accordance with one embodiment of the invention. The printer 100 first receives 205 time-based media 151 from an external source with the media source interface 105. This media 151 may be received as digital or analog data, or it may be an observable event that the interface 105 records as digital or analog data. Coupled to the interface 105 to receive the media 151, the media processing system 125 processes 210 the media data to generate a requested type of output (e.g. printed or electronic). This processing 210 is performed in accordance with the intended functionality of the printer 100, and examples of different operations are described in greater detail below.

In one embodiment, the system includes a printer embedded user interface 110 and/or a user interface (e.g.) 180 at a coupled external device (e.g. networked external device 170 or a docked cell phone or personal digital assistant ) to allow a user to preview the generated outputs. If 215 the user desires to refine the processing, the user can enter commands, which the printer 100 receives 220 by way of the user interface (e.g. 110 or 180). Based on the user's commands, the printer 100 then repeats the processing 210 of the media data to generate new output. This refinement process can be iterated until the user is satisfied with the printed or electronic output. When this occurs, the user will indicate that the printing should commence, for example, by invoking a print command with the user interface (e.g. 110 or 180). The media processing system 125 then sends the generated output to the corresponding output system (e.g. printed output system 115 or the electronic output to the electronic output system 120). The corresponding output system 115, 120 then creates 225 an output.

It can be appreciated that this generalized description of a multifunction printer lends itself to a great number of specific configurations and applications. Accordingly, examples of the possible configurations, applications, and particular components are further described.

### Media Source Interface

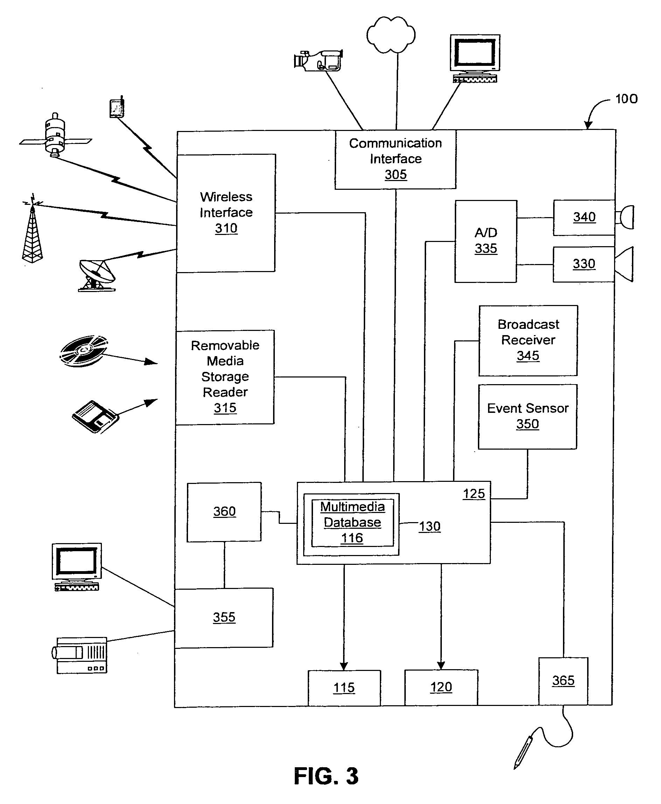

The media source interface 105 can be designed to accommodate any suitable type of time-based media. Because of the great variety of types and formats of media data, the media source interface 105 may take any number of forms to accept any time-based media that a user might wish to print. FIG. 3 illustrates some examples of different interfaces 105 by which the printer 100 can receive media data from an external source. In particular implementations, the printer 100 may have only one or only a subset of these types of interfaces 105, and in addition may have other types of interfaces not shown.

As shown in FIG. 3, the printer 100 may include a communication interface 305 that allows the printer 100 to be communicatively coupled to at least one other electronic device. Depending on the desired input, the interface 305 may allow the computer to communicate with a wide variety of different electronic devices that can provide the printer 100 with time-based media to print. Without intending to limit the types of devices, the interface 305 may allow the printer 100 to received media data from external sources such as computer systems, computer networks, digital cameras, video cameras, media renderers (such as DVD and CD players), media receivers (such as televisions, satellite receivers, set-top boxes, radios, and the like), external storage devices, video game systems, or any combination thereof. The connection type for the interface 305 can take a variety of forms based on the type of device that is intended to be connected to the printer 100 and the available standard connections for that type of device. For example, the interface 305 may comprise a port for connecting the device using a connection type such as USB, serial, FireWire, SCSI, IDE, RJ11, optical, composite video, component video, or S-video, or any other suitable connection type.

In another embodiment, the printer 100 includes a wireless interface 310. As illustrated, the wireless interface 310 allows the printer 100 to receive media data from a wireless device external to the printer 100. The wireless interface 310 may allow the printer 100 to communicate with any number of wireless communication systems, such as wireless components on a home or business network, cellular phones and other portable wireless devices, satellites, satellite dishes, and devices using radio transmissions. Depending on the types of external devices with which the printer 100 is desired to communicate, the wireless interface 310 may comprise hardware and/or software that implements a wireless communications protocol, such as that described in IEEE 802.11, IEEE 802.15, IEEE 802.16, or the Bluetooth standard.

In another embodiment, the printer 100 receives media data from a removable media storage reader 315 that is built into the printer 100. The removable media storage reader 315 may be configured to accommodate any type of removable media storage device, such as DVDs, CDs, video cassette tapes, audio cassette tapes, floppy disks, ZIP disks, flash cards, micro-drives, memory sticks, SD disks, or any other suitable type of media storage devices. Moreover, the printer 100 may have a plurality of removable media storage readers 315 to accommodate multiple types of media storage devices.

In another embodiment, the printer 100 includes an embedded video recorder 330. In this embodiment, the external source of media data is a series of images captured by the embedded the video recorder 330. The video recorder 330, such as a camera, CCD, or other suitable mechanism for capturing a sequence of images, converts a scene into a suitable electrical format, such as that described in the MPEG, H.263, or H.264 standards. Optionally, an analog-to-digital converter 335 converts an image directly from the video recorder 330 into a digital format, which is then provided to the media processing system 125. In yet another embodiment, the media processing system 125 receives raw video data from the video recorder 330 and performs any necessary conversion, encoding, and compression on the video data.

In another embodiment, the printer 100 includes an embedded audio recorder 340. In this embodiment, the external source of media data is a series of sounds that are converted into an electrical format by the embedded audio recorder 340. The audio recorder 340 converts the recorded sound signal into a suitable electrical format, such as that described in MPEG-2. Optionally, an analog-to-digital converter 335 converts the sound directly from the audio recorder 340 into a digital format, which is then provided to the media processing system 125. In yet another embodiment, the media processing system 125 receives raw audio data from the audio recorder 340 and performs any necessary conversion, encoding, and compression on the audio data.

In another embodiment, the printer 100 comprises a media broadcast receiver 345. The media broadcast receiver 345 can be tuned to a media broadcast from a media broadcaster. Types of media broadcasts that can be tuned into and received include broadcasts from the Internet, cable, television, radio, and any other broadcast media source. To tune into a particular media broadcast, a user may select the broadcast using the user interface 110. In one embodiment, the broadcast receiver 345 is an embedded TV receiver, an embedded radio receiver, an embedded short-wave radio receiver, an embedded satellite radio receiver, an embedded two-way radio, an embedded cellular phone, or a combination of any of the above. However, these are not meant to be limiting, as the broadcast receiver 345 can be any device that is capable of tuning into a signal and receiving media data therefrom.

In another embodiment, the printer 100 includes an embedded event sensor 350 that receives a signal about or otherwise observes a real-world event. Similar to a broadcast receiver 345, the event sensor 350 may receive data about a real-world event, for example, by an embedded National Weather Service radio alert receiver or an embedded TV Emergency Alert System (EAS) alert monitor. Alternatively, the event sensor 350 may comprise an embedded heat sensor, an embedded humidity sensor, or another type of measuring device so that the event sensor 350 can directly measure the environment and generate time-based media therefrom. In this way, the printer 100 can be used to record events near the printer or far from it and generate meaningful time-based informational outputs based on those events.

In another embodiment, the printer may include video capture hardware 355. In one embodiment, the video capture hardware 355 is designed to be coupled to a computing system by a video cable thereof. The video cable from a display is attached to the printer 100, where the video signal is split with one signal directed to the computing system and another signal to the video capture hardware 355. The video capture hardware 355 performs a differencing between successive frames of the video signal and saves frames with a difference that exceeds a threshold on a secondary storage in the printer 100. This offloads such processing from the computing system, thereby improving responsiveness and user experience and providing an easily browseable record of a user's activities during the day. To take advantage of the printing capabilities of the multifunction printer, the user can chose to print selected frames captured by the video capture hardware 355. The printing can be generated on demand with the user interface 110 on the printer or from an attached computing device (e.g. via 105), a networked external device 170, or an external networked service 160, or automatically with scheduling software. In this way, a user can view a replay of any actions taken on the computing system. Notably, the captured content can be effectively compressed because the differences between frames are small.

In another embodiment, the video capture hardware 355 is coupled to a converter module 360, such as VGA-to-NTSC conversion hardware. Such an embodiment could be used in conjunction with a projector to capture presentations made with the projector. Audio capture could also be employed to record a speaker's oral presentation. To use the video capture hardware 355 in this way, a user could connect a laptop or other computing system and the projector to the printer 100. The printer 100 then captures video frames and compares them to the most recently captured frame and retains those frames that are different. A parallel audio track may also be saved. This capability could also be used in a desktop printer to record a presentation made on a computing system connected to the printer. The printer can then serve the audio itself or it can be written to a digital medium, such as an SD disk that can be played from a cell phone or a PDA. The audio could also be written to a bar code on a printed representation.

In another embodiment, the printer 100 comprises an ultrasonic pen capture device 365. In this embodiment, the printer 100 includes a hardware module 365 that serves as a low-cost sensor that can be coupled to a paper document. With such a device, a user can write on a paper document, and the results are saved on the printer 100. In one form, the captured results include the user's writing in combination with time data that indicates when the writing occurred. This time-based media data can then be printed or sent (e.g., by electronic mail) to someone else, for example showing a user's notes as well as time stamps that indicate when the notes were taken. It is noted that there are several other methods for capturing pen strokes and time data, using pens that scan patterns printed on paper, or using special writing surfaces such as electromagnetic tablets.

### Printed Output System

The printed output system 115 may comprise any standard printing hardware, including that found in standard laser printers, inkjet printers, thermal wax transfer printers, dye sublimation printers, dot matrix printers, plotters, or any other type of printing mechanisms suitable for creating a printer image on an appropriate physical medium. In the example described herein, a laser printer mechanism is described; however, it should be understood that any suitable printing system can be used. The printer 100 includes any necessary subsystems, as know by one skilled in the art, to print on a printable medium, such as a sheet of paper.

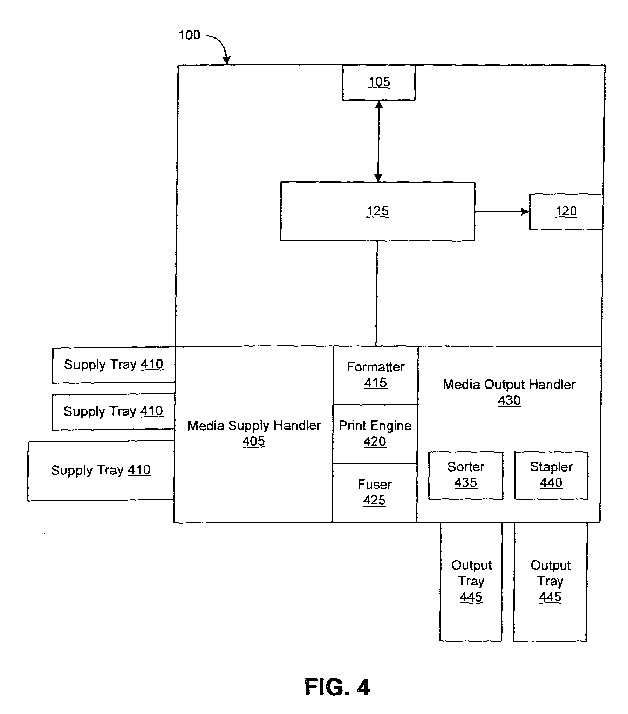

Figure 4 is a schematic diagram of the printer's printed output system 115 in accordance with an embodiment of the present invention. The printed output system 115 comprises a media supply handler 405 that receives blank paper to be printed on. The media supply handler 405 typically obtains the paper from a supply tray 410. The printer 100 may include multiple supply trays 410, allowing the printer to accommodate different sizes and types of paper as well as trays 410 of varying capacity. When the printer 100 needs blank paper for printing, the media supply handler 405 provides the print engine 420 with a sheet of blank medium.

The formatter 415 converts data received from the media processing system 125 into a format that the print engine 420 can use to create an image on the paper. The print engine 420 creates an image on the paper as indicated by the formatter 415. A fuser 425 then uses high temperature and pressure to fuse the image onto the paper to fix the image thereon. Once the image is fixed, the paper is fed to the media output handler 430. Although not shown, it is appreciated that the printer 100 includes any necessary motors, gears, and diverters to cause the paper to move through the printer 100.

The media output handler 430 receives one or more printed sheets of paper and performs any requested finishing to the sheets. For example, the media output handler 430 may include a sorter 435 to sort or collate the sheets for multiple copies and a stapler 440 to attach the sheets together. When the finishing process is complete, the media output handler 430 moves the sheets to an output tray 445, of which there may be multiple trays 445 to accommodate different sizes, types, and capacities of printed output.

### Electronic Output System

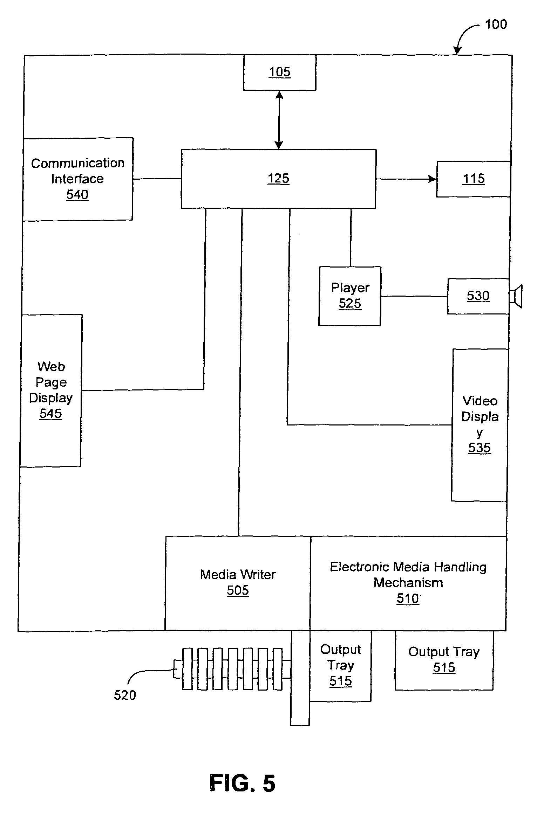

The electronic output system 120 can be designed to produce an electronic output related to the media data in any desired format. Because of the great variety of types and formats of electronic outputs, the electronic output system 120 may take any of a number of forms for producing an electronic output desired by the user. FIG. 5 illustrates some examples of different embodiments of the electronic output system 105. In particular implementations, the printer 100 may have only one or only a subset of the various components shown, and in addition it may have other types of not shown.

In one embodiment, the printer 100 writes the electronic output to a removable media device with a media writer 505. Many different types of media writers are know in the art, and the media writer 505 may comprise any of these. For example, the media writer 505 may be configured to write the electronic output to removable storage devices such as a writeable DVD or CD, a video cassette tape, an audio cassette tape, a flash card, a computer disk, an SD disk, a memory stick, or any other appropriate electronically-readable medium. Moreover, the electronic output system 120 may include a number of media writers 505 of different types to allow the printer 100 to print onto different electronic formats. In addition, the electronic output system 120 may include a number of media writers 505 of the same type to increase the output capacity of the printer 100.

The removable storage device that receives the electronic output from the printer 100 may be fed to the media writer directly by a user, for example by inserting a blank disk into a drive. In another embodiment, the printer 100 includes an electronic media handling mechanism 510 coupled to the media writer 505 that automatically provides the media writer 505 with an appropriate type of removable storage device. The handling mechanism 510 may further be configured to physically place written to storage devices into an output tray 515. In one embodiment, a series of blank storage devices are fed to the printer 100 by a bandolier 520 or other type of feeder, allowing the printer 100 to create a high volume of electronic output without requiring a significant amount of interaction with a human operator. The bandolier 520 preferably then places the written to devices into an output tray 515.

In another embodiment, the media writer 505 is a disposable media writer, configured to write electronic data to a disposable removable media storage mechanism. In another embodiment, the media writer 505 writes the electronic data to a self-destructing medium. In this way, a user can view the electronic data for a predetermined number of times or during a predetermined period of time, after which the electronic data are no longer viewable.

In another embodiment, the electronic output system 120 includes a speaker system 530. The speaker system 530 is designed to receive an audio signal from the media processing system 125, in response to which the audio is played from an embedded speaker 530 in the printer 100. The electronic output system 120 may further include a player 525 or audio renderer that receives an encoded audio signal from the media processing system 125 and converts it into an audio signal for the speaker 530. The player 525 thus takes some of the processing load off the media processing system 125. For example, the player 525 may include a MIDI player for generating the audio signal; however, many other audio renderers may be used, in either hardware or software.

In another embodiment, the electronic output system 120 includes a video display 535. The video display 535 is designed to receive a video signal from the media processing system 125, in response to which the video is played on the video display 535 embedded into the printer 100. Similarly, the video display 535 may receive the video signal directly from a driver to reduce the processing load on the media processing system 125. In one example, the video display is embedded on the housing 102 for viewing. For example, it may be part of user interface 110. In another example, it is attached via a physical coupling to the printer 100. This allows for it to be wall mounted for example. In either example of an embedded or attached display, the display can also have a full-size screen.

In another embodiment, the printer 100 transmits the electronic output that is to be printed to another device as a signal. This signal can later be fixed in a tangible medium by the external device. To facilitate this, the electronic output system 120 includes a communication interface 540. The communication interface receives the electronic output from the media processing system 125 and sends the electronic output to the external device, which may be in communication with the printer 100 over a local network, the Internet, a wireless network, a direct connection, or any other suitable communication means.

In another embodiment, the electronic output system 120 comprises an embedded web page display 545. The web page display 545 allows a user to see a representation of the electronic output in a web-based form. In one example, the display is embedded on the housing 102 for viewing. For example, it may be part of user interface 110. In another example, it is attached via a physical coupling to the printer 100. This allows for it to be wall mounted for example. In either example of an embedded or attached display, the display can also have a full-size screen.

### Media Processing System

The media processing system 125 of the printer 100 is designed to perform the specialized functionality of the multifunction printer 100. To send and receive messages between the external service 160 or the external device 170, the processing system 125 includes a processor 135 and a memory 130. In addition, the media processing system includes one or more hardware and/or software modules that enable the printer 100 to create related printed and electronic outputs for different types of time-based media. In this way, the printer 100 can be configured to have any number of embedded functionalities.

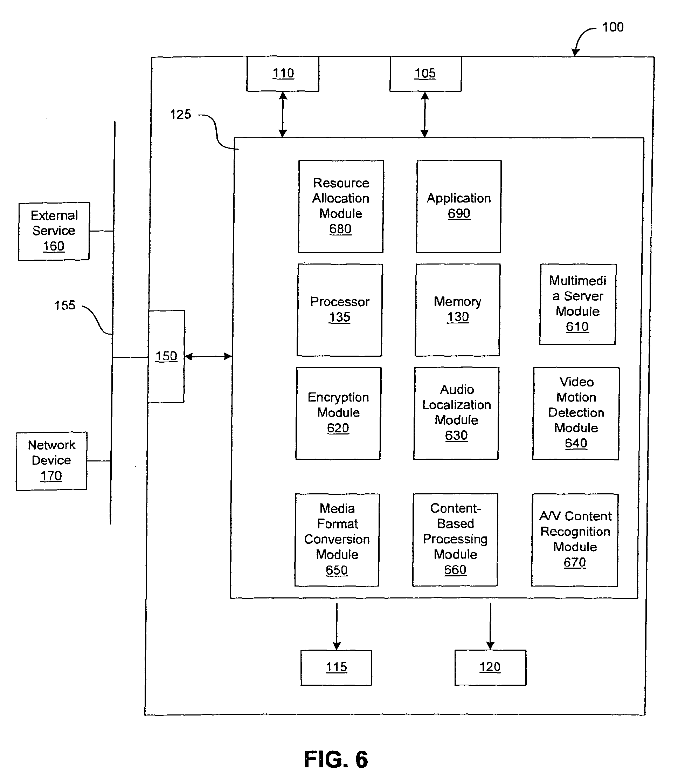

In one embodiment, as illustrated in FIG. 6, the printer includes one or a combination of a resource allocation module and embedded media processing modules. In this embodiment, examples of illustrated embedded media processing modules include an embedded multimedia server module 610, an encryption module 620, an audio localization module 630, a video motion detection module 640, a media format conversion module 650, a content-based processing module 660, and an A/V content recognition module 670. Each of these embedded functionality modules are described in further detail below.

Although the media processing system 125 is configured to perform at least some of the processing of the media data on the printer 100, the system 125 is preferably coupled to an external computing device or external service that shares some of the computing burden. In the illustrated example of Figure 1, the printer 100 includes a network interface 150 to allow communication with an external network device 170 and/or external service 160, which are capable of performing at least a portion of the media processing functionality. The network device 170 may be a computer system or a dedicated media processing hardware device. In this way, the printer 100 relieves the source of the time-based media from at least some of the processing burden required to implement the printer's functionality, but the printer 100 need not should the entire burden. The printer 100 can thus avoid slow-downs that can result from a heavy processing load, which may be especially important for shared printers.

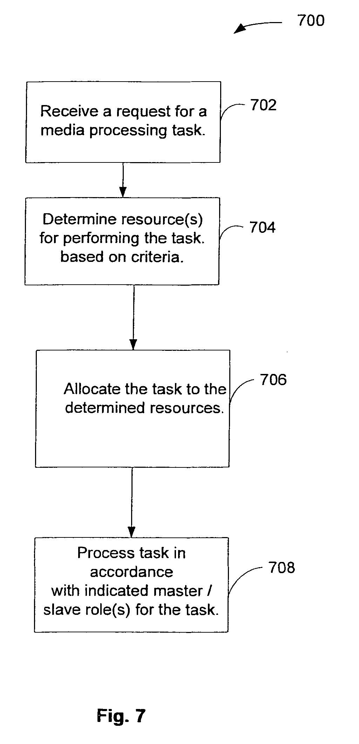

Figure 7 is a flow diagram of a method for allocating resources for a media processing task. For illustrative purposes, this method is discussed in the context of the resource allocation module 680 of Figure 6. The resource allocation module 680 receives 702 a request for a media processing task. Such a request can be generated by user input or from an external device or external service. The module 680 determines 704 a resource or resources for performing the task based on criteria. An example of a resource is an embedded media processing module or a combination of such modules. Another example of a resource is media content processing software available at an external service, or multimedia format transformation hardware and / or software on an external device. Criteria can be based on user input. For example, user interface 110 displays on a display (e.g. web display 545) a list of external services and/or external devices accessible by the printer 100 as well as printer resources that can perform a media processing task, for example, segmenting a video into clips. A mouse click or touchscreen can be used to indicate selection of a resource or data entry (e.g. typed keyboard entry or a selected directory path from a directory listing of an external device) can indicate an external service identifier, for example, a Uniform Resource Indicator (URI) or Uniform Resource Locator (URL) or software and /or hardware and / or firmware on an external device by an identifier such as a directory location. Another criteria is speed or availability of a resource. For example, preferably the embedded version of a media processing module may be the preferred resource for a task, but it is busy processing another task, perhaps on a separate embedded processor with the printer 100. The preferred embedded resource is unavailable, so the same module or an earlier version of the module on a networked computer 170 can be allocated to process this task. This can provide faster response time to the user. A resource on a networked device 170 may have the fastest processor in the network, so it may make sense to assign the task to that processor if it is not busy. The module 680 allocates 706 the task to the determined resources. The determined resources process 708 the task in accordance with master or slave role indicated for the task. A task can include sub-tasks or be a sub-task of another task. One sub-task of a task can be performed by one resource in a slave role, while another sub-task of the task can be performed by the same resource in a master role. In one example, the master or slave role can be stored in a table in memory 130 for each media processing task to be performed by the printing system. A system administrator can determine which media processing functions individually or in combination form a task and can set-up such a role table in memory 130. The criteria for allocating resources dynamically such as user input or speed or availability can also determine the role a printer resource plays and an external resource plays in accomplishing a task. Consider an example, in which an external media processing device of video transcoding hardware is assigned the master role in downloading a video file to the multimedia server 610 acting in a slave device role. The transcoding hardware has a master software interface that notifies the multimedia server, for example via an interrupt, when it is sending content from the file. The multimedia server 610 has a slave software interface that is notified by the interrupt and responsive thereto, performs processing to receive the content and store it in its associated file. The transcoding hardware is the master because it determines when downloading occurs. In another example, the multimedia server executes a master software interface in controlling the storage of multimedia content in its multimedia database 116 from an external web service having a software interface acting like a slave device under the commands of the multimedia server. Roles can change for different tasks, and a resource, internal or external, can have both a master interface or a slave interface. Either interface may be implemented in hardware, firmware or software or in any combination of them. It should be noted that several similar or identical printers might work in cooperation, as peers, dynamically trading master and slave roles as needed to meet user needs.

### Printer With Multimedia Functionality

As explained, the printer 100 may include an embedded multimedia server module 610 that enables the printer 100 to act as a multimedia server and have associated functionality. In various embodiments, the multimedia server module 610 includes hardware and software for carrying out multimedia functionality, media processing software, and computer interface hardware and software. In this way, the printer 100 can act like a multimedia server, which could be shared by a work group or used as a personal printer. In one embodiment, the multimedia server 610 manages the multimedia database 116 by storing and retrieving content selections as well as creating meta-data associated with each content selection to identify it or maintain instructions associated with it. An example of a content selection is a video file, an audio file, or a text file. The following examples illustrate that embodiments of printer 100 including the multimedia database 116 could be very useful in a walk-up kiosk as can be found in a convenience store.

Consider an example in which the multimedia database 116 includes a music catalog, or a video database, or a movie database or a digital photo catalog, or a combination of one or more of these media types. The user interface 110 displays a print dialog box on the display (e.g. display 545) which presents the user with a list of the songs, a list of video recordings, a list of movies or a list of photos, resident in the printer 100 or accessible to it via an external service 160 or external device 170. The user can chose to "print" any of those songs, videos, movies or photos. Responsive to input indicating a content selection, if previewing is a feature of the printer, and user input indicates 215 previewing is requested, the content selection is provided 225 in the sensual form appropriate to its type. For example, if a song is selected and previewing is requested, a digital version of the song is retrieved from the database 116, converted from digital to analog form (e.g A/D 335) and played through a speaker system 330 for the user. In a similar fashion, the media processing system 125 can cause a video to be displayed, or a preview version of it to be displayed, on an embedded or attached video display 535. Similarly, a selected photo forwarded from a web server of an external service 170 can be previewed and displayed on the web page display 545. In another example, the database is communicatively coupled to an internal database (e.g. of company recorded meetings). Additionally, in the example of an embedded digital photo catalog, a user can select pictures for printing or generate an index document of photos without having to turn on a separate computer networked to the printer. For example, if every time a user prints a jpeg image, the printer automatically or under control of the print dialog box, saves a copy of the jpeg on the printer, she can build a personal photo archive and peruse the archive without turning on her desktop computer.

During the previewing of the content selection, a user may have made edits, such as marks or annotations, to the content selection using multimedia content editing software which can be saved to a new version of the content selection temporarily stored in a local memory portion of memory 130. Responsive to user input indicating criteria for a content index document, content indexing software generates an index document for the content selection. The index paper document can indicate only the marked portions or the whole content selection (See Video Paper patent applications). The print out would be a convenient time-saver allowing one to browse what occurred in a meeting, while away from a network connection that would enable replaying of the digital media. The print out would also be a convenient time-saver allowing one to browse what occurred in a movie, while away from a network connection that would enable replaying of the digital media.

Responsive to user input indicating a preferred print medium, the multimedia server 610 transfers the content selection in a format suitable for that print medium to the suitable printed output system 115 or the electronic output system 120. In the case of the song catalog, examples of the print medium that can be used are a CD or cassette. In the case of a video or a movie, examples of the print medium that can be used are a DVD or videocassette. In the case of the photos, examples of the print medium that can be used are paper or a memory stick. In one example, the database of content selections can be updated through a network interface 150 by downloading from a web site via the web server 110 for instance. Various embodiments of a multifunction printer having multimedia functionality are possible applications for a printer in accordance with embodiments of this invention. A number of specific embodiments for such a printer are described in the co-pending U.S. patent application number 10/814,842, filed March 30, 2004, entitled "Printer with Multimedia Server," Attorney Docket No. 20412-08351, which application has been incorporated by reference in its entirety. A printer with an embedded multimedia server is described that includes a processor primarily allocated for print control and another processor for executing a multimedia server for interfacing with hardware and/or software interfaces for various forms of media. Examples of such interfaces include a network interface, a VGA port, transcoding hardware, wireless interfaces and a (USB) port. Examples of types of media processed include video, audio and text. The multimedia server performs multimedia content processing, particularly for time-based data, examples of which include editing, formatting, scheduling capture of content, searching, recognition, and event detection. Additionally, the printer can provide a multimedia storage database. The printer provides a user interface on its chassis that can provide a web browser, so that a user can interact directly with the printer for indicating preferences for multimedia content processing and/or selection for printing onto a desired output medium.

### Printer With Encryption Functionality

Similarly, the printer 100 may include an embedded encryption module 620, which enables the printer 100 to perform encryption functions on the received media data. In a typical application, the printer 100 receives a media file to be encrypted, encrypts the file, and then writes the encrypted media file onto a removable storage device. The printer 100 also prints an associated paper output that provides information about the encryption, such as the encryption key, a password, an identification of the media, and optionally a description of the content of the media encrypted.

While various embodiments of a multifunction printer having encryption functionality are possible applications for a printer in accordance with embodiments of this invention. A number of specific embodiments for such a printer are described in the co-pending U.S. patent application number 10/814,841, filed March 30, 2004, entitled "Multimedia Output Device Having Embedded Encryption Functionality," Attorney Docket No. 20412-08352, which application has been incorporated by reference in its entirety. A multimedia output device having embedded encryption functionality enables the outputting of content in an encrypted form. The multimedia output device receives the content to be encrypted, encrypts the content, and generates an electronic output of the encrypted content. The multimedia output device also generates an associated paper output that provides information about the decryption, such as a key, an identification of the electronic output of the encrypted content, and optionally a description of the contents of the content encrypted.

### Printer With Audio Localization and/or Video Motion Detection Functionality

In addition, the printer 100 may include an embedded audio localization module 630 and/or an embedded video motion detection module 640, which enable the printer 100 to produce outputs based on the location of sound or the detection of motion in the received media. In this way, the printer can observe events and aid the user in filtering through a massive amount of data about those events.

In one embodiment, the printer 100 includes embedded audio capture and sound source localization hardware. In another embodiment, or in addition, the printer 100 includes video capture and motion detection hardware and software. In this way, the printer 100 can create a printed document and an electronic output that, together, summarize the audio and/or video events that were detected. The events can be defined and their representation in a document can be designed before the events occur. That information can then be communicated to the printer 100 by printing the document before the events happen. The printer can recognizes future events in the documents it receives and schedule documents for printing after the events are detected. This may be helpful, for example, to verify the creation of intellectual property or to detect the time when a burglar entered an office. If the documents are printed, the paper can be easily incorporated in an existing paper-based workflow.

In an example embodiment, the media data include video data with a separate multi-channel audio track that was produced from a known configuration of microphones. In this way, the system can be designed to optimize audio source localization. The printer can then create outputs based on the result of sound localization and user input that indicates the directions of interest to the user. For example, clips can be selected from the video when people in those locations were speaking. Key frames and bar codes for those clips can then be printed on the printed output.

Various embodiments of a multifunction printer having audio localization and/or video motion detection functionality are possible applications for a printer in accordance with embodiments of this invention. A number of specific embodiments for such a printer are described in the co-pending U.S. patent application number 10/813,946, filed March 30, 2004, entitled, "Printer with Audio/Video Localization," Attorney Docket No. 20412-08356, which application has been incorporated by reference in its entirety. A multimedia printing device receives multimedia data, processes it, and outputs it, thereby enhancing the handling and use of such data. In an embodiment, the processed data are output in a variety of formats, including on video paper, through a multimedia broadcast, or a bar code pointer to a digital archive. In another embodiment, the multimedia printing device receives multimedia data and uses the data to perform multimedia and video localization on the peripheral devices that generate the multimedia data. In another embodiment, the multimedia printing device carries out commands to capture and process multimedia data, including by inserting multimedia objects into existing documents.

### Printer With Media Format Conversion Functionality

As explained above, the printer 100 may include an embedded media format conversion module 650. The media format conversion module 650 enables the printer 100 to convert the received media data into various formats other than that in which it is received. The media format conversion module 650 may include appropriate hardware and software for carrying out its functionality, such as audio rendering software, processing logic for different types of media conversions, and a speaker output. In this way, the printer 100 may contain an embedded formatter that can decode, encode, and/or convert media data from one format type into another format type.

In one embodiment, the printer 100 converts a digital audio file, such as a MIDI file, into a paper representation as a musical score. Optionally, the printer 100 also converts the input data to another audio format, such as MP3, that could be played on other devices, such as a cell phone. Bar codes can be added to a printed paper representation of the media to let the user play the audio corresponding to lines of music on a remote device or through the speaker on the printer.

Various other embodiments of a multifunction printer having audio format conversion functionality are possible applications for a printer in accordance with embodiments of this invention. A number of specific embodiments for such a printer are described in the co-pending U.S. patent application number 10/813,849, filed March 30, 2004, entitled, "Music Processing Printer," Attorney Docket No. 20412-08358, which application has been incorporated by reference in its entirety. A multimedia printing device receives multimedia data, processes it, and outputs it, thereby enhancing the handling and use of such data. In an embodiment, the processed data are output in a variety of formats, including on video paper, through a multimedia broadcast, or a bar code pointer to a digital archive. In another embodiment, the multimedia printing device receives multimedia data and uses the data to perform multimedia and video localization on the peripheral devices that generate the multimedia data. In another embodiment, the multimedia printing device carries out commands to capture and process multimedia data, including by inserting multimedia objects into existing documents. Printer With Content-Based Processing Functionality

As explained, the printer 100 may include an embedded content-based processing module 660, which enables the printer 100 to receive and process real-time broadcasts of media data responsive to the content of the media. In one embodiment, the printer 100 includes an embedded receiver, such as a television, satellite, or cable, radio, or other type of media receiver. The printer 100 may further include processing logic that can monitor a live media feed, recording media, generate a printed representation of the media, and play the audio or video on the printer's console. The printer 100 thus enables the live monitoring of the content of radio or television broadcasts and the generation of paper and storage of multimedia in response to events detected in those streams.

Examples of events include tone sequences indicative of National Weather Service or Emergency Alert Service alerts, but they could also include user-defined events such as the appearance of a specified set of key words in the closed caption of a television broadcast, the appearance of a given image in a video stream (e.g., a face image), or the occurrence of gun shots in an audio stream. The instant generation of the paper when events occur allows the user to pick up a print-out off the printer at any later time without needing to press any other buttons or performing other manual operations.

Various embodiments of a multifunction printer having content-based processing functionality are possible applications for a printer in accordance with embodiments of this invention. A number of specific embodiments for such a printer are described in the co-pending U.S. patent application number 10/813,846, filed March 30, 2004, entitled, "Printer With Audio or Video Receiver, Recorder, and Real-Time Content-Based Processing Logic," Attorney Docket No. 20412-08369, which application has been incorporated by reference in its entirety. A system and method for monitoring events from a media stream and triggering an action in response to detected events. The action is preferably based on information relating to the event received by the system. The system can generate a paper document that reflects some aspects of the detected event such as a summary describing the event. The system can also generate a network message (e.g., email or paging call) in response to the detected event. In other embodiments, the system stores multimedia in memory in response to the detected event. The system can also generate an audio on a speaker or a video on a video display system attached to the printer based on the detected event.

### Printer With Audio/Video Content Recognition and Processing Functionality

As explained, the printer 100 may include an embedded A/V content recognition module 670, which enables the printer 100 to recognize particular properties in the content of the media data and process the data based on that recognized content. In one embodiment, the printer 100 receives the media data from an electronic file, which the printer 100 uses to convert the time-based media into related printed and electronic outputs. In one embodiment, the printer 100 includes audio and/or video content recognition and processing software and/or hardware. The types of embedded hardware and software required depend on the desired content recognition functionality, and examples of the types of functionalities the embedded A/V content recognition module 370 may perform include video event detection, video foreground/background segmentation, face detection, face image matching, face recognition, face cataloging, video text localization, video optical character recognition (OCR), language translation, frame classification, clip classification, image stitching, audio reformatting, speech recognition, audio event detection, audio waveform matching, caption alignment, audio-caption alignment, and any other type of media content recognition algorithms. The printer 100 further includes processing logic that interacts with the user through the user interface 110 to generate the desired printed and electronic outputs.

Various embodiments of a multifunction printer having audio/video content recognition and processing functionality are possible applications for a printer in accordance with embodiments of this invention. A number of specific embodiments for such a printer are described in the co-pending U.S. patent application number 10/813,950, filed March 30, 2004, entitled, "Printing System With Embedded Audio/Video Content Recognition and Processing," Attorney Docket No. 20412-08394, which application is incorporated by reference in its entirety. A printing system includes embedded functionality for performing media content recognition and processing. Based on the results of the content recognition and processing performed on the media content, the printing system can generate a paper-based or other printed representation thereof. The printing system may further produce a corresponding electronic representation of the media content, which in combination with the printed representation can be used to view and access the media content. A printing system may also include a media renderer application having a print functionality for printing selected media content.

### General Comments

While examples of suitable printing systems are described above, the description of the printer and its document production means is not meant to be limiting. Depending on the intended application, a printer can take many different forms other than the typical office or home-use printer with which most people are familiar. Therefore, it should be understood that the definition of a printer includes any device that is capable of producing an image, words, or any other markings on a surface. Although printing on paper is discussed above, it should be understood that a printer in accordance with various embodiments of the present invention could produce an image, words, or other markings onto a variety of tangible media, such as transparency sheets for overhead projectors, film, slides, canvass, glass, stickers, or any other medium that accepts such markings.

In addition, the description and use of media and media data are not meant to be limiting, as media may include any information used to represent any kind of media or multimedia content, such as all or part of an audio and/or video file, a data stream having media content, or a transmission of media content. Media content may include one or a combination of audio (including music, radio broadcasts, recordings, advertisements, etc.), video (including movies, video clips, television broadcasts, advertisements, etc.), software (including video games, multimedia programs, graphics software, etc.), and pictures; however, this listing is not exhaustive. Furthermore, media data may further include anything that itself comprises media content or media data, in whole or in part, and media data includes data that describes a real-world event. Media data can be encoded using any encoding technology, such as MPEG in the case of video and MP3 in the case of audio. They may also be encrypted to protect their content using an encryption algorithm, such as DES, triple DES, or any other suitable encryption technique.

Moreover, any of the steps, operations, or processes described herein can be performed or implemented with one or more software modules or hardware modules, alone or in combination with other devices. It should further be understood that portions of the printer described in terms of hardware elements may be implemented with software, and that software elements may be implemented with hardware, such as hard-coded into a dedicated circuit. In one embodiment, a software module is implemented with a computer program product comprising a computer-readable medium containing computer program code, which can be executed by a computer processor for performing the steps, operations, or processes described herein.

In alternative embodiments, the printer can use multiple application servers, acting in cooperation. Any of the requests or messages sent or received by the printer can be sent across a network, using local cables such as IEEE1394, Universal Serial Bus, using wireless networks such as IEEE 802.11 or IEEE 802.15 networks, or in any combination of the above.

The foregoing description of the embodiments of the invention has been presented for the purpose of illustration; it is not intended to be exhaustive or to limit the invention to the precise forms disclosed. Persons skilled in the relevant art can appreciate that many modifications and variations are possible in light of the above teachings. It is therefore intended that the scope of the invention be limited not by this detailed description, but rather by the claims appended hereto.

## Claims

1. A system for printing time-based media, the system comprising:
a media processing system for determining an electronic representation of the time-based media wherein the media processing system resides at least in part on a multimedia printer and at least in part on an external media processing system; and
a printer including a housing for supporting an interface for receiving time-based media from an external source and being communicatively coupled to send time-based media to the media processing system, and an electronic output system in communication with the media processing system to receive the electronic representation, the electronic output system producing a corresponding electronic output from the electronic representation of the time-based media.

2. The system of claim 1, wherein the external media processing device is a personal computer.

3. The system of claim 1, wherein the media processing system determines a printed representation of the time-based media; and the system further comprises a printed output system in communication with the media processing system to receive the printed representation, the printed output system producing a corresponding printed output from the printed representation of the time-based media; .

4. The system of claim 1, wherein the external media processing device is
a remote external service system coupled to the network, the external service system in communication with the media processing system for performing at least some processing steps for the time-based media.

5. The system of claim 3, wherein the external service system is coupled to the network by the Internet.

6. The system of claim 1, wherein the interface comprises a communication interface allowing the system to be communicatively coupled to an electronic device, the electronic device providing the time-based media to the system.

7. The system of claim 1, wherein the interface comprises a removable media storage reader.

8. The system of claim 1, wherein the interface comprises a media input device selected from a group consisting of: a DVD reader, a video cassette tape reader, a CD reader, an audio cassette tape reader, and a flash card reader.

9. The system of claim 1, wherein the external source is a media broadcaster, and wherein the interface comprises a media broadcast receiver that can be tuned to a media broadcast.

10. The system of claim 1, wherein the interface comprises an embedded receiver selected from a group consisting of: an embedded TV receiver, an embedded radio receiver, an embedded short-wave radio receiver, an embedded satellite radio receiver, an embedded two-way radio, and an embedded cellular phone.

11. The system of claim 1, wherein the interface comprises an embedded device selected from a group consisting of: an embedded heat sensor, an embedded humidity sensor, an embedded National Weather Service radio alert receiver, and an embedded TV Emergency Alert System (EAS) alert monitor.

12. The system of claim 1, wherein the interface comprises embedded screen capture hardware.

13. The system of claim 1, wherein the interface comprises an ultrasonic pen capture device.

14. The system of claim 1, wherein the interface comprises an embedded video recorder, wherein the external source of media is a series of images captured by embedded the video recorder, converted into an electrical format, and then provided to the media processing system.

15. The system of claim 1, wherein the interface comprises an embedded audio recorder, wherein the external source of media is a series of sounds that are converted into an electrical format by the embedded audio recorder and then provided to the media processing system.

16. The system of claim 1, wherein the electronic output system is configured to write the electronic representation to a removable media storage device.

17. The system of claim 16, wherein the removable storage device is selected from a group consisting of: a DVD, a video cassette tape, a CD, an audio cassette tape, a flash card, a computer disk, an SD disk, and a computer-readable medium.

18. The system of claim 1, wherein the electronic output system comprises a handling mechanism to accommodate a plurality of removable storage devices.

19. The system of claim 18, wherein the handling mechanism is selected from a group consisting of: a feeder, a bandolier, and a tray.

20. The system of claim 1, wherein the electronic output system comprises a media writer selected from a group consisting of: a disposable media writer and a self-destructing media writer.

21. The system of claim 1, wherein the electronic output system is coupled to a speaker system and sends an audio signal to the speaker system.

22. The system of claim 21, wherein the electronic output system comprises an embedded sound player for generating the audio signal.

23. The system of claim 1, wherein the electronic output system comprises an embedded web page display.

24. The system of claim 1, wherein the media processing system comprises an embedded multimedia server.

25. The system of claim 1, wherein the media processing system comprises an embedded audio encryption module.

26. The system of claim 1, wherein the media processing system comprises an embedded video encryption module.

27. The system of claim 1, wherein the media processing system comprises an embedded audio sound localization module.

28. The system of claim 1, wherein the media processing system comprises an embedded video motion detection module.

29. The system of claim 3, wherein the external media processing system includes a user interface that provides information to a user about at least one of the printed representation and the electronic representation of the time-based media, the user interface further accepting input from a user to cause the media processing system to modify at least one of the printed representation and the electronic representation of the time-based media.

30. The system of claim 3, wherein the media processing system determines at least one of the printed representation and the electronic representation with assistance from an external media processing system that is an external computing device.

31. The system of claim 3 wherein the printer further comprises the following supported by its housing:
an input source for receiving time-based media,
a first output source coupled to the input source, the first output source producing a printed representation of the time-based media, and
a second output source coupled to the input source, the second output source producing an electronic representation of the time-based media, the electronic representation of the time-based media corresponding to the printed representation of the time-based media; and
a display.

32. The system of claim 31, wherein the input source comprises a communication interface allowing the printer to be communicatively coupled to an electronic device, the electronic device providing the media to the printer.

33. The system of claim 31, wherein the input source comprises a removable media storage reader.

34. The system of claim 31, wherein the input source comprises a media input device selected from a group consisting of: a DVD reader, a video cassette tape reader, a CD reader, an audio cassette tape reader, and a flash card reader.

35. The system of claim 31, wherein the input source comprises a media broadcast receiver that can be tuned to a media broadcast.

36. The system of claim 31, wherein the input source comprises an embedded receiver selected from a group consisting of: an embedded TV receiver, an embedded radio receiver, an embedded short-wave radio receiver, an embedded satellite radio receiver, an embedded two-way radio, and an embedded cellular phone.

37. The system of claim 31, wherein the input source comprises an embedded device selected from a group consisting of: an embedded heat sensor, an embedded humidity sensor, an embedded National Weather Service radio alert receiver, and an embedded TV Emergency Broadcast System (EBS) alert monitor.

38. The system of claim 31, wherein the input source comprises embedded screen capture hardware.

39. The system of claim 31, wherein the input source comprises an ultrasonic pen capture device.

40. The system of claim 31, wherein the input source comprises an embedded video recorder, wherein the external source of media is a series of images captured by embedded the video recorder, converted into an electrical format, and then provided to the media processing system.

41. The system of claim 31, wherein the input source comprises an embedded audio recorder, wherein the external source of media is a series of sounds that are converted into an electrical format by the embedded audio recorder and then provided to the media processing system.

42. The system of claim 31, wherein the second output source is configured to write the electronic representation to a removable media storage device.

43. The system of claim 42, wherein the removable storage device is selected from a group consisting of: a DVD, a video cassette tape, a CD, an audio cassette tape, a flash card, a computer disk, an SD disk, and a computer-readable medium.

44. The system of claim 31, wherein the second output source comprises a handling mechanism to accommodate a plurality of removable storage devices.

45. The system of claim 44, wherein the handling mechanism is selected from a group consisting of: a feeder, a bandolier, and a tray.

46. The system of claim 31, wherein the second output source comprises a media writer selected from a group consisting of: a disposable media writer and a self-destructing media writer.

47. The system of claim 31, wherein the second output source is coupled to a speaker system and sends an audio signal to the speaker system.

48. The system of claim 47, wherein the second output source comprises an embedded sound player for generating the audio signal.

49. The system of claim 31, wherein the second output source comprises an embedded web page display.
